# EUROPÄISCHE PATENTSCHRIFT

(11) **EP 0 940 082 B1**
(45) Veröffentlichungstag und Bekanntmachung des Hinweises auf die Patenterteilung: **04.12.2002**
(21) Anmeldenummer: 99101900.1
(22) Anmeldetag: 29.01.1999
(51) Int. Cl.: A21B 3/13

(54) **Kastenform zum Herstellen von Brot**
Box-shaped form for producing bred
Moule en forme de caisson pour fabriquer des pains

(30) Priorität: 03.03.1998 DE 19808815
(43) Veröffentlichungstag der Anmeldung: 08.09.1999
(73) Patentinhaber: Brinker, Karl, 44649 Herne (DE)
(72) Erfinder: Brinker, Karl, 44649 Herne (DE)
(74) Vertreter: COHAUSZ DAWIDOWICZ HANNIG & PARTNER

(56) Entgegenhaltungen:
- EP-A- 0 012 588
- GB-A- 2 304 541

## Beschreibung

Die Erfindung betrifft eine längliche Kastenform zum Herstellen von Brot , wobei der Teig in die Form gegossen wird, um darin ausgebacken zu werden.

Es ist bekannt Süßigkeiten oder Pralinen in Herzform herzustellen. Diese werden in Formen gegossen, die in waagerechtem Querschnitt eine Herzform aufweisen. Eine solche Herstellung ist aufwendig, da pro hergestelltem Stück eine eigene Form erforderlich ist. Auch ist es aus der GB 23 04 541 bekannt, eine Backform in waagerechter Herzform zu verwenden, um Brot, Kuchen oder Pizza herzustellen. Auch hier kann eine Herzform in größerer Länge nicht erzeugt werden, um danach das Produkt in viele herzförmige Scheiben aufteilen zu können.

Aufgabe der Erfindung ist es, eine Kastenform zum Herstellen von Brot zu schaffen, durch die eine Herzform herstellbar ist, das nach der Herstellung durch senkrechtes Schneiden in einzelne herzförmige Scheiben aufteilbar ist.

Diese Aufgabe wird erfindungsgemäß dadurch gelöst, dass zwei gegenüberliegende Seitenwände nach unten hin in einem spitzen Winkel aufeinander zulaufen, so dass der senkrechte Querschnitt V-förmig ist.

Eine solche Kastenform bildet den unteren Bereich eines senkrecht stehenden Herzens in größerer Länge, so dass nur noch dafür gesorgt werden muss, dass die obere Seite zwei Längswülste bildet. Hierzu kann beispielsweise die Oberseite in Längsrichtung mittig eingeschnitten werden, wonach aufgrund es Backens die zwei Längswülste sich selbsttätig ausbilden.

Somit ist eine Kastenform gebildet, die herzförmiges Brot, insbesondere in Scheibenform auf einfachste Weise in großer Stückzahl ermöglicht. Die Kastenform ist von einfacher Konstruktion und das Herstellungsverfahren einfach und von geringstem Arbeitsaufwand.

Besonders vorteilhaft ist es, wenn zwei oder mehr Kastenformen gleicher Gestalt zueinander parallel aneinander zu einer Mehrfachform befestigt sind. Hierdurch kann die Anzahl der hergestellten Lebensmittel noch vergrößert werden und eine Standfestigkeit der Kastenform erreicht werden. Auch können damit verhältnismäßig kleine Lebensmittelstücke hergestellt werden.

Hierzu wird auch vorgeschlagen, dass der Innenraum durch mindestens eine Querwand in Teilbereiche unterteilt ist.

Um die Oberseite durch zwei Längswülste bzw. Längswellen zu gestalten, wird vorgeschlagen, dass sie durch einen Deckel abdeckbar ist, dessen Unterseite zwei zueinander parallele gleichgroße Längsausnehmungen mit Kreisabschnitt, insbesondere halbkreisförmigen senkrechten Querschnitt bildet.

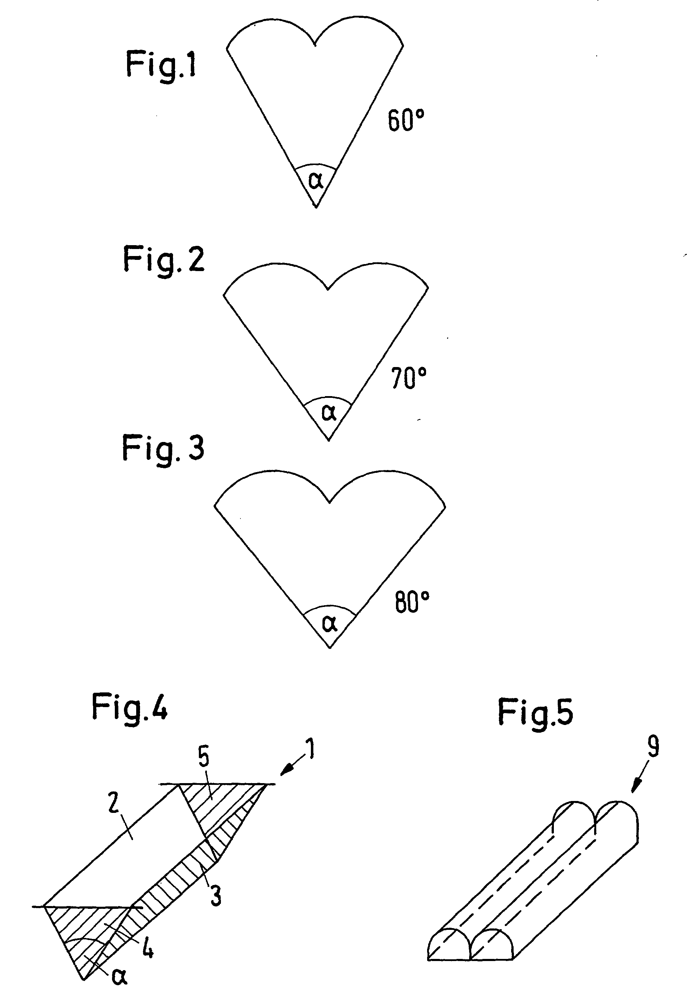

Ausführungsbeispiele der Erfindung sind in den Zeichnungen dargestellt und werden im folgenden näher beschrieben. Es zeigen
- Fig. 1: eine Stirnansicht eines fertigen Lebensmittels, insbesondere eines Brotes mit einer unteren Spitze von 60°,
- Fig. 2: eine Stirnansicht nach Fig. 1 mit einer unteren Spitze von 70° und
- Fig. 3: eine Stirnansicht nach Fig. 1 mit einer unteren Spitze von 80°,
- Fig. 4: eine isometrische Ansicht einer Kastenform,
- Fig. 5: eine isometrische Ansicht eines Deckels,
- Fig. 6: eine Mehrfach-Kastenform,
- Fig. 7: eine Kastenform nach Fig. 6 mit oberem zusätzlichen Rand,
- Fig. 8: eine Kastenform nach Fig. 6 mit mehrfacher Aufteilung der einzelnen Mulden.

Eine Kastenform 1 weist eine erste ebene Seitenwand 2 und eine zweite ebene Seitenwand 3 auf, die nach unten hin schräg aufeinander zulaufen, so dass ein senkrechter Querschnitt durch die längliche Kastenform 1 dreieckförmig, in Form eines gleichschenkligen Dreiecks ist, mit der Spitze nach unten. Die gleiche Form besitzen auch die beiden Stirnseiten 4, 5 der Kastenform.

Die beiden Seitenwände 2, 3 bilden somit einen spitzen Winkel α von 60 bis 80°, so dass die Kastenform ein auf den Kopf gestelltes Dach darstellt und die Kastenform auf dem First des Daches steht. Der Innenraum der Kastenform bildet eine Mulde 6, in die ein Lebensmittel in flüssigem oder teigigem Zustand gegossen wird, um darin fest zu werden. Dieses Festwerden kann durch erhitzen, d. h. durch ein Backen, durch ein Gefrieren oder durch ein Steifwerden des Lebensmittels über eine bestimmte Zeitdauer insbesondere aufgrund eines Abkühlens erfolgen. Wird in die Kastenform ein Teig, insbesondere für Brot gegossen, so wird der Teig nach oben hin aufgehen. Hierbei kann dafür gesorgt werden, dass in die Oberseite des Lebensmittels in Längsrichtung der Kastenform mittig ein Schnitt eingebracht wird, so dass das Lebensmittel, insbesondere das Backgut, an der Oberseite 2 Längswülste 7, 8 bildet, so dass das fertige Lebensmittel, insbesondere das gebackene Gut im Querschnitt eine Herzform aufweist.

Eine Herzform kann aber auch dadurch erreicht werden, dass während des Aufgehens des Lebensmittels ein Deckel 9 auf die Kastenform gesetzt wird, der zwei zueinander parallele gleich große Längsausnehmungen mit Kreisabschnittform an seiner Unterseite bildet, so dass das Brot, durch die Form des Deckels zwei obere Längswülste erhält.

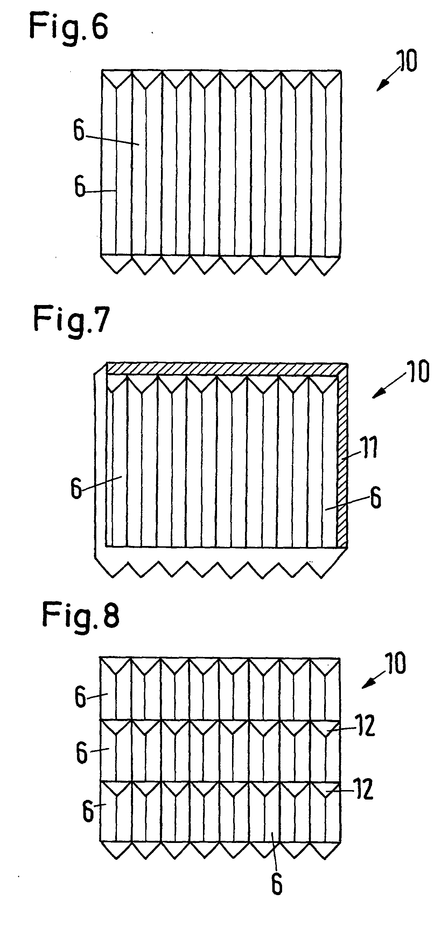

Wie in Fig. 6 gezeigt, können auch mehrere Kastenformen nebeneinander befestigt, insbesondere aneinandergeformt sein, um gleichzeitig mehrere Brote herzustellen. Diese Mehrfachform 10 kann wie in Fig. 7 gezeigt, einen oberen Rand 11 besitzen, der nach oben senkrecht vorsteht und ein Überlaufen verhindert. Ferner ist in Fig. 8 eine Ausführungsform gezeigt, bei der die einzelnen Mulden 6 durch Querwände 12 unterteilt sind.

## Patentansprüche

1. Längliche Kastenform (1) zum Herstellen von Brot, wobei der Teig in die Form gegossen wird, um darin ausgebacken zu werden, **dadurch gekennzeichnet, dass** zwei gegenüberliegende Seitenwände (2, 3) nach unten hin in einem spitzen Winkel aufeinander zulaufen, so dass der senkrechte Querschnitt V-förmig ist.

2. Kastenform nach Anspruch 1, **dadurch gekennzeichnet, dass** zwei oder mehr Kastenformen (1) gleicher Gestalt zueinander parallel aneinander zu einer Mehrfachform befestigt sind.

3. Kastenform nach Anspruch 1 oder 2, **dadurch gekennzeichnet, dass** der Innenraum (6) durch mindestens eine Querwand (12) in Teilbereiche unterteilt ist.

4. Kastenform nach einem der vorherigen Ansprüche, **dadurch gekennzeichnet, dass** sie durch einen Deckel (9) abdeckbar ist, dessen Unterseite zwei zueinander parallele gleichgroße Längsausnehmungen mit Kreisabschnitt, insbesondere halbkreisförmigen senkrechten Querschnitt bildet.

5. Verfahren unter Verwendung einer Kastenform (1) nach einem der vorherigen Ansprüche, **dadurch gekennzeichnet, dass** nach dem Einfüllen des Teiges in die Kastenform nach einem leichten Festwerden die Oberseite des Lebensmittels in Längsrichtung der Kastenform mittig eingeschnitten wird.

## Claims

1. An oblong box mould (1) for making bread, wherein the dough is poured into the mould in order to be baked throughout therein, **characterised in that** two opposite sidewalls (2, 3) run downwards towards each other at an acute angle so that the vertical cross-section is V-shaped.

2. A box mould according to claim 1, **characterised in that** two or more box moulds (1) of the same shape are fixed to each other parallel to each other to form a multiple mould.

3. A box mould according to claim 1 or 2, **characterised in that** the internal volume (6) is subdivided into sections by at least one transverse wall (12).

4. A box mould according to any one of the preceding claims, **characterised in that** it can be covered by a lid (9), the underside of which forms two longitudinal recesses of the same size, which are parallel to each other and which form a segment of a circle, particularly a semicircular, vertical cross-section.

5. A method using a box mould (1) according to any one of the preceding claims, **characterised in that** after the dough has been introduced into the box mould and has solidified slightly, the upper surface of the foodstuff is cut centrally in the longitudinal direction of the box mould.

## Revendications

1. Moule en forme de caisson (1) allongé pour la fabrication de pain, la pâte étant versée directement dans le moule en forme de caisson (1) pour être cuite dedans,
**caractérisé en ce que** deux parois latérales (2,3) opposées courent l'une vers l'autre vers le bas sous un angle aigu de telle sorte que la section transversale verticale est en forme de V.

2. Moule en forme de caisson selon la revendication 1,
**caractérisé en ce que** deux moules en forme de caisson (1) ou plus de même forme sont fixés les uns aux autres parallèlement entre eux en un moule en forme de caisson multiple.

3. Moule en forme de caisson selon la revendication 1 ou 2,
**caractérisé en ce que** le volume intérieur (6) est divisé en zones partielles par au moins une paroi transversale (12).

4. Moule en forme de caisson selon l'une des revendications précédentes,
**caractérisé en ce qu'**il peut être recouvert par un couvercle (9) dont la face inférieure forme deux évidements longitudinaux de même grandeur, parallèles entre eux, à section circulaire, en particulier à section transversale verticale semi-circulaire.

5. Procédé et utilisation d'un moule en forme de caisson (1) selon l'une des revendications précédentes,
**caractérisé en ce que**, après le remplissage de la pâte dans le moule en forme de caisson, la face supérieure de l'aliment, après un léger durcissement, est entaillée centralement en direction longitudinale du moule en forme de caisson.
